# EUROPÄISCHE PATENTANMELDUNG

(11) **EP 2 607 408 A1**
(43) Veröffentlichungstag der Anmeldung: **26.06.2013**
(21) Anmeldenummer: 11194923.6
(22) Anmeldetag: 21.12.2011
(51) Int. Cl.: C08J 3/22, C08K 3/04, C08K 7/24, C08J 3/21

(54) **Verfahren zur staubfreien Herstellung von nanopartikelhaltigen (CNT) Masterbatches in hochviskosen Kautschuken mittels Dreiwalzenwerk**

(71) Anmelder: Rhein Chemie Rheinau GmbH, 68219 Mannheim (DE)
(72) Erfinder: Schröder, Andreas, 69463 Weinheim (DE); Meenenga, Vincenza, 68723 Schwetzingen (DE); Briquel, Luc, 67100 Strasbourg (FR)
(74) Vertreter: Siegers, Britta

(57) **Zusammenfassung**

Die Erfindung betrifft ein neues Verfahren zur Herstellung nanopartikelhaltiger Masterbatches in hochviskosen Kautschuken mittels Dreiwalzenwerk. Dabei werden die pulverförmigen Nanopartikel mit mindestens einem Polymer-Latex vermischt, auf Temperaturen ≥ 100°C erwärmt und nach Entfernung des Wassers auf weniger als 10 Gew.% mit einem Dreiwalzenwerk dispergiert.

## Beschreibung

Die Erfindung betrifft ein neues Verfahren zur Herstellung nanopartikelhaltiger Masterbatches, insbesondere Carbon-Nanotubes- haltige Masterbatches für Elastomere.

Unter dem Begriff Masterbatch versteht man in einen polymeren Binder gebundene Additive mit einem Gehalt der Additive, der höher sind als in der Endanwendung.

Carbon-Nanotubes (CNT) sind nanoskalige faserförmige Röhrchen aus Kohlenstoffatomen. Kommerziell erhältliche Carbon-Nanotubes weisen einen Durchmesser von ca. 10 nm auf bei einer Länge von ≥ 0,1 µm. Aufgrund des nanoskaligen Durchmessers und dem sehr hohen Aspekt von ≥ 10 besitzen diese neuen Materialien ein besonderes Verstärkungspotential für Elastomere und andere Polymere als herkömmliche makroskopische Fasern, wie Carbonfasern oder Aramidfasern sowie sphärische nanoskalige Füllstoffe, wie Ruß oder Kieselsäure. Einzelne CNTs besitzen zudem eine sehr hohe elektrische und thermische Leitfähigkeit sowie eine sehr hohe mechanische Festigkeit.

Kommerziell erhältliche CNTs werden hergestellt über das Chemical Vapour Deposition (CVD)-Verfahren. Die CNTs liegen dabei als pulverförmige verknäulte Agglomerate mit Durchmessern von bis zu 5 mm vor. Um die besonderen Eigenschaften der CNTs in einen polymeren Werkstoff zu übertragen, müssen diese deagglomeriert und vereinzelt werden. Dabei sollen die CNTs idealerweise nicht verkürzt werden. Die Knäuelstruktur dieser makroskopischen Agglomerate und die gleichzeitig sehr hohe Festigkeit dieser nanoskaligen Fasern erschwert die Dispergierbarkeit erheblich, vor allem im Vergleich zu herkömmlichen makroskopischen Fasern oder den sphärischen Füllstoffpartikeln.

In Fällen schlechter Dispergierbarkeit von faserigen oder nanoskaligen pulverförmigen Rohstoffen, wie zum Beispiel Carbonfaser, Aramidfasern, Ruß oder Kieselsäure, hat es sich als vorteilhaft erwiesen, diese zunächst in hochkonzentrierter Form in einen hochviskosen polymeren Binder, wie z.B. Naturkautschuk (NR), Styrolbutadienkautschuk (SBR), Ethylenpropylendienkautschuk (EPDM) Nitrilkautschuk (NBR) vorzudispergieren. Hierzu werden Extruder oder Innenmischer verwendet. Bei hohen Faser- bzw. Füllstoffkonzentrationen werden höhere Scherkräfte zu Dispergierung generiert. Dieser Masterbatch wird später in einen Kautschuk eingemischt (DE-A-1195941; EP-A 1095961; EP-A 1304347, US-A 6413478). Zudem stehen CNTs im Verdacht Asbestose beim Menschen auszulösen [Muller J, et al. (2005). Respiratory toxicity of multi-wall carbon nanotubes. Toxicol. Appl. Pharmacol.; 207: 221-231.], zum Beispiel, wenn diese über einen längeren Zeitraum schon in geringen Konzentrationen, wie sie zum Beispiel beim Einwiegen, Umfüllen von Pulvern leicht enstehen können, eingeatmet werden.

Bei der Masterbatch-Herstellung werden häufig Weichmacher zur Unterstützung benutzt. Hierzu ist aber eine so große Menge an Weichmacher erforderlich, dass hierdurch die Verstärkungseffekte von CNTs im Elastomer überlagert würden. Alternativ könnten die CNT-Pulver mit Wasser angefeuchtet werden, hierzu ist aber ebenfalls eine hohe Menge an Wasser erforderlich, die wiederum zum Beispiel in einem Knetprozess durch Verdampfen entfernt werden müsste.

Die Verwendung von Masterbatches verhindert das Entstehen von Stäuben in diesen Konzentrationen. Daher ist die vorzugsweise Verwendung von Masterbatches für die Kautschuk verarbeitende Industrie eine notwendige Voraussetzung für den Einsatz von Carbon-Nanotubes.

In den bislang bekannten Verfahren zur Herstellung von CNT-Masterbatches (EP-A 1 995 274 , WO- 2008047022) werden die CNTs über einen Knetprozess zum Beispiel mittels Innenmischer oder Extruder in einen polymeren Binder, wie z.B. Naturkautschuk (NR), Styrolbutadienkautschuk (SBR), Ethylenpropylendienkautschuk (EPDM) oder auch Nitrilkautschuke (NBR), eingebracht. Zum einen werden dabei pulverförmige Materialien verwendet mit den beschrieben Risiken für den Verarbeiter. Zum Anderen sind dabei sehr lange Mischzeiten im Bereich von einer Stunde erforderlich [A. Schröder, et al, Effect of MWCNT Dispersion in NBR-Compounds, Kautschuk Gummi Kunststoffe 64 (2011) S. 42 bis 46], um homogenere Mischungen herzustellen. Mit zunehmender Mischzeit, d.h. mit zunehmender Homogenität und Dispersion der Füllstoffe sinkt allerdings nachteiligerweise die elektrische Leitfähigkeit (H. H. Le, et al, Kautschuk Gummi Kunststoffe, 62 (2009) S. 326). Die CNTs können dabei stark verkürzt werden. Gleichzeitig werden aber selbst nach langen Mischzeiten große verknäuelte Agglomerate im Masterbatch gefunden. Große Agglomerate sind Fehlstellen, von denen ein Versagen eines Bauteiles mit elastomeren Werkstoffen ausgehen kann [A. Schröder, Kautschuk Gummi Kunststoffe 61 (2008) S. 584 bis 596].

Zudem wird bei diesen Verfahren nicht beschrieben, wie die CNTs staubfrei in die Mischaggregate überführt werden können. Eine Einhausung von großen Mischaggregaten, wie in der Gummiindustrie üblich, ist nur sehr schwer möglich.

In EP10186382.7 werden die CNTs in wässriger Phase mit Ultraschall dispergiert, mit Polymerlatex versetzt und koaguliert. Der so erhaltene Masterbatch wird aufbereitet (getrocknet). Bei diesem Verfahren verbleibt ein nicht zu vernachlässigender Anteil an Dispergierhilfsmittel im Masterbatch. Dieser wirkt sich störend in der Gummimischung (zum Beispiel in Form einer reduzierten Elastizität und/oder Festigkeit) und den daraus hergestellten Bauteilen aus. Zudem ist das eingesetzte Dispergierhilfsmittel relativ teuer. Bei den in EP10186382.7 beschriebenen Herstellungsverfahren verbleibt zudem viel Wasser nach Koagulation im Masterbatch und dieser muss aufwendig getrocknet werden.

In einem anderen Verfahren werden die CNTs ebenfalls vorher in wässriger Suspension mittels Perlmühle dispergiert. Die Suspension wird einem Extruder zugeführt und mit einem polymeren Material extrudiert. Das Wasser wird dabei bei hohen Temperaturen mit Hilfe einer Vakuumpumpe während der Extrusion entfernt und gleichzeitig die vorher dispergierten CNT-Agglomerate im Polymer homogen verteilt. Bei diesem Verfahren verbleibt das Dispergierhilfsmittel vollständig im Polymer, was sich bei elastomeren Werkstoffen nachteilig auf das Eigenschaftsprofil auswirkt

Aufgabe der vorliegenden Erfindung war es daher, ein effektives, schnelles und damit kostengünstiges Verfahren zur Herstellung von nanopartikelhaltigen, vorzugsweise Carbon-Nanotubes-haltigen, Masterbatches bereitzustellen, nach dem diese so hergestellt werden, dass die positiven Eigenschaften der Nanopartikel, bzw. der CNTs möglichst ohne Qualitätsverlust auf den Masterbatch und dem späteren Endprodukt übertragen werden können und welches zudem ein staubfreies Arbeiten ermöglicht ist.

Überraschenderweise werden alle diese Kriterien von dem erfindungsgemäßen Verfahren erfüllt, bei dem die Nanopartikel mit mindestens einem Polymer-Latex vermischt, auf Temperaturen ≥ 100°C erwärmt und nach Entfernung des Wassers auf weniger als < 10 Gew. %, vorzugsweise < 1 Gew% auf einem Dreiwalzenwerk dispergiert werden. Die Entfernung des Wassers erfolgt dabei vorzugsweise in einem in einem Knetaggregat, zum Beispiel einem Extruder, Innenmischer oder einem Pressmischer. Durch das erfindungsgemäße Verfahren bleiben die positiven Eigenschaften der Nanopartikel/CNTs im so hergestellten Masterbatch und dem späteren Endprodukt erhalten. Negative Auswirkungen von zugesetzten Dispergierhilfsmitteln für die CNTs werden ausgeschlossen. Nach dem Vermischen mit dem Polymerlatex können die pulverförmigen Nanopartikel staubfrei weiterverarbeitet werden.

Gegenstand der vorliegenden Erfindung ist daher ein Verfahren zur Herstellung von nanopartikelhaltigen, vorzugsweise Carbon-Nanotubes-haltigen Masterbatches, bei dem die Nanopartikel mit mindestens einem Polymer-Latex vermischt, auf Temperaturen ≥ 100°C erwärmt und nach Entfernung des Wassers auf weniger als 10 Gew.%, vorzugsweise < 1 Gew.% auf einem Dreiwalzenwerk dispergiert werden.

Die Nanopartikel, die im Sinne der Erfindung eingesetzt werden, sind vorzugsweise Feststoffe, vorzugsweise pulverförmige Feststoffe, die nicht in Wasser löslich sind. Die in dem erfindungsgemäßen Verfahren eingesetzten Nanopartikel weisen vorzugsweise zu 90 % Agglomerate größer als 10 µm und kleiner als 2, vorzugsweise < 1 mm auf (gemessen mit Laserlichtstreuung in wässriger Suspension).

Bevorzugt ist der Einsatz von Carbon-Nantotubes.

Bei den Carbon-Nantotubes, die im Sinne der Erfindung eingesetzt werden, handelt es sich um alle gängigen CNTs, wie z.B. single-wall, double wall, multi-wall, etc. Diese sind kommerziell verfügbar, z.B. bei der Firma BayerMaterial Science AG oder können nach den, dem Fachmann geläufigen Chemical Vapour Deposition Verfahren oder anderen Verfahren hergestellt werden.

Als Polymere für den Polymer-Latex eignen sich alle über Emulsionspolymerisation herstellbaren Polymere sowie Naturkautschuk (NR). Beispiele hierfür sind (Isoprenkautschuk (IR), Styrol-Butadien-Kautschuk (SBR), carboxylierter Styrol-Butadien-Kautschuk (XSBR), Butadienkautschuk (BR), Isopren-isobutylen-Kautschuk (IIR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxylierter Acrylnitril-Butadien-Kautschuk (HXNBR), Fluorkautschuk (FKM), perfluorierter Fluorkautschuk (FFKM), Acrylat-Ethylen-Kautschuk (AEM), Acrylatkautschuk (ACM), Ethylen-Methylen-Acrylatkautschuk (EMA) und/oder Ethylen-Vinylacetat-Kautschuk (EVA) sowie Acrylsäureester-Styrol-Copolymerisate. Diese liegen vorzugsweise als kolloidale Dispersion in Wasser (Latex-Material) vor. Bevorzugt sind Latices von carboxylierten Kautschuken. Der Kolloiddurchmesser beträgt vorzugsweise ≤ 500 nm, besonders bevorzugt ≤ 200 nm ganz besonders bevorzugt ≤ 100 nm.

Im Fall des Polymer-Latex beträgt der Feststoff-Anteil im Latex vorzugsweise > 15%, besonders bevorzugt > 30 %, ganz besonders bevorzugt > 50%, bezogen auf den Latex.

Die Herstellung des Latex erfolgt nach den dem Fachmann bekannten Verfahren durch Emulsionspolymerisation, wie zum Beispiel in dem Lehrbuch "Makromolekulare Chemie" von M.D. Lechner, K. Gehrke, E.H. Nordermeier Birkhäuser Verlag 1993, Seiten 127 bis 129 beschrieben.

Das Mischen der Nanopartikel mit mindestens einem Polymer-Latex erfolgt dabei vorzugsweise mittels eines Rühr- und/oder Knetaggregates, wie zum Beispiel ein Flügelrührer, Dispergrader, Knetspiralen oder in einem Dispermat® R, zum Beispiel erhältlich bei der Firma VMA-Getzmann GmbH. Vorzugsweise werden die CNTs dabei zunächst mittels Rühr- und/oder Knetaggregat, vorzugsweise eines Dispermat®R, in den Polymerlatex eingerührt. Ein zusätzliches Dispergierhilfsmittel für die CNTs wird vorzugsweise nicht verwendet. Bevorzugt erfolgt die Zugabe der CNTs zu der Dispersion innerhalb einer geschlossenen Einhausung, die gegenüber dem umgebenden Arbeitsraum durch Staubfilter abgetrennt ist, und in dem gegenüber der Atmosphäre ein Unterdruck zum Personenschutz herrscht, wie zum Beispiel in einer GloveBox.

In einer bevorzugten Ausführungsform der vorliegenden Erfindung beträgt der Anteil an Nanopartikeln, vorzugsweise Carbon-Nanotubes, in der Mischung mit dem Polymerlatex mindestens 5 Gew.%, in einer weiteren bevorzugten Form Gew. 10%, in einer ganz besonders bevorzugten Form 20 Gew.%.

Im Anschluss wird die Mischung dann auf Temperaturen ≥ 100°C, vorzugsweise Temperaturen von 100°C bis 200°C erwärmt. Dadurch wird die Entfernung des Wassers bevorzugt auf weniger als 10 Gew.% besonders bevorzugt weniger als Gew.1% sichergestellt.

Dies erfolgt vorzugsweise mittels eines weiteren Knetaggregates, wie zum Beispiel einem Innenmischer, Pressmischer oder ein Extruder. Besonders bevorzugt ist ein Vakuumextruder zur Entfernung des Wassers.

Bevorzugt wird das Wasser in weniger als 20 min. besonders bevorzugt in weniger als 10 min. ganz besonders bevorzugt in weniger als 5 min. entfernt.

In dem weiteren Knetaggregat können bei der Herstellung des nanopartikelhaltigen Masterbatches weitere Zusatzstoffe, wie zum Beispiel weitere Kautschuke, Füllstoffe, Weichmacher, Alterungsschutzmittel, Abbaumittel, Verstärkungsmittel und/oder Verarbeitungshilfsmittel zugegeben werden.

Als Kautschuke sind Naturkautschuk (NR), Isoprenkautschuk (IR), Styrol-Butadien-Kautschuk (SBR), Butadienkautschuk (BR), Isopren-Isobutylen-Kautschuk (IIR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxyliertere Acrylnitril-Butadien-Kautschuk (HXNBR), Ethylen-Propylen-Dien-Kautschuk (EPDM), Ethylen-Propylen-Kautschuk (EPM), Fluorkautschuk (FKM), Perfluorierter Fluorkautschuk (FFKM), Acrylat-Ethylen-Kautschuk (AEM), Acrylatkautschuk (ACM), Ethylen-Methylen-Acrylatkautschuk (EMA), chloriertes Polyethylen, chlorsulfoniertes Polyethylen, Ethylen-Vinylacetat-Kautschuk (EVA), Siliconkautschuk, Fluro-Silicon-Kautschuk, Ethylen-Epichlorhydrin Kautschuk (ECO), Epichlorhydrin-Kautschuk (CO) und/oder Polyurethan-Kautschuk (PU) bevorzugt.

Als Füllstoffe sind helle anorganische Füllstoffe, wie z.B. Glimmer, Kaolin, Kieselerde, Kieselsäure, Kreide, Talkum, Magnesium und Kalziumoxid, Kohlenstoff-Füllstoffe, wie z.B. Ruß, Graphit, Graphene, magnetisierbare Füllstoffe wie Carbonyl-Eisenpulver, Eisenoxide, Ferrite und/oder Fasern wie z.B. Aramidfaserpulpe, Kohlefasern bevorzugt.

Bei den Weichmachern im Sinne der Erfindung handelt es sich um Mineralölweichmacher, vorzugsweise naphthenische, paraffinische und/oder aromatische Weichmacher, um synthetische Weichmacher, vorzugsweise Thioester, Phthalsäureester, Alkylsulpfonsäureester, Adipinsäureester, Sebacinsäurester, Dibenzylether, aromatische Polyether, Polyglycolether, Phosphorsäureester und/oder Chlorparaffine.

Als Alterungsschutzmittel sind verfärbende und nicht verfärbende Alterungsschutzmittel, wie z.B. Paraphenylendiamine, Isopropylphenylparaphenylendiamin (IPPD), Para-Phenylen-Diamin (6PPD), N,N-ditoly-p-phenylendiamine (DTPD), etc., Amine, wie z.B. Trimethyl-1,2-dihydrochinolin (TMQ), (Phenyl)amine]-1,4-naphthalendion (PAN), Bis(4-octylphenyl)amin (ODPA), styrolisiertes Diphenylamin (SDPA), Mono- und Bisphenole, wie z.B. 2,2'-Methylen-bis-(4-methyl-6-tert.butylphenol(BPH), 2,2'-Isobutyliden-bis-(4,6-dimethyl-phenol) (NKF), 2,2'-Dicyclo-pentadienyl-bis-(4-methyl-6-tert.-butyl-phenol) (SKF), 2,2'-Methylen-bis-(4-methyl-6-cyclohexyl-phenol (ZKF), 2,6-Di-tert.-butyl-p-kresol (BHT), substituiertes Phenol (DS), styrolisierte Phenole (SPH), Mercatpbenzimidazole, wie z.B. 2-Mercaptobenzimidazol (MBI), 2-Mercaptomethyl-benzimidazole (MMBI), Zink-4- und Zink-5-methyl-2-mercapto-benzimidazole (ZMMBI) bevorzugt.

Bei den Verarbeitungshilfsmitteln handelt es sich um dem Fachmann bekannte oberflächenaktive Substanzen, die die Grenzflächenspannung zwischen der Komponente, die dispergiert werden soll, und dem Dispersionsmedium herabsetzen. Dabei bevorzugt sind Fettsäuren, wie zum Beispiel Stearinsäure, Metallseifen, Fettsäurederivate, Fettsäureester, Fettsäureamide und Fettalkohle sowie Kohlenwasserstoffharze und niedermolekulare Kohlenwasserstoffe mit weniger als 100 Kohlenstoffatomen.

Abbaumittel sind organische Katalysatoren, die durch starke Erhöhung der Konzentration von Startradikalen in Gegenwart von Sauerstoff bei erhöhter Temperatur einen Polymerabbau ermöglichen, wie zum Beispiel Thiophenole, Zinkseifen, Aryldisulfide, Peroxide, Metallkomplexe, Derivate von Thiocarbonsäuren, Hydrazinderivate.

Bei den Verstärkungsmitteln handelt es sich um Polymerharze und Phenolharze.

Bei den Verarbeitungshilfsmittel und Abbaumitteln handelt es sich um handelsübliche Chemikalien, wie zum Beispiel Aflux® 37, Aktiplast® PP und Aktiplast® 8 die erhältlich sind bei der Firma RheinChemie Rheinau GmbH.

Anschließend erfolgt die Dispergierung der Agglomerate aus Nanopartikeln auf einem Dreiwalzenwerk.

Bei den Dreiwalzenwerken, z.T. in der Literatur auch Dreiwalzwerk oder Dreiwalzstuhl genannt, handelt es sich um handelsübliche Aggregate, die z.B. bei der Firma Exakt GmbH bezogen werden kann. Ein Dreiwalzenwerk besteht aus einer Aufgabewalze, einer Mittelwalze und einer Abnahmewalze. Die Walzen können beim erfindungsgemäßen Verfahren auf Temperaturen von vorzugsweise mehr als 90°C besonders bevorzugt mehr als 120°C ganz besonders bevorzugt mehr als 150°C geheizt werden.

In einer Ausführungsform der Erfindung wird die Mischung aus Carbon-Nanotubes und Kautschuk auf die Aufgabewalze des Dreiwalzenwerkes gegeben und im Walzenspalt zwischen Mittel- und Aufgabewalze vordispergiert. Über die Mittelwalze wird der CNT-haltige Masterbatch zum Walzenspalt zwischen Mittel- und Abnahmewalze transportiert und dort dispergiert und anschließend von der Abnahmewalze abgenommen.

Die Spaltbreiten des Dreiwalzenwerkes sind beliebig wählbar. Bevorzugt sind jedoch Spaltbreiten zwischen 5 und 120µm. Des Weiteren bevorzugt ist der Walzenspalt zwischen Mittel- und Abnahmenahmewalze enger als der Walzenspalt zwischen Aufnahme- und Mittelwalze. In einer Ausführungsform der Erfindung erfolgt die Dispergierung in einem Dreiwalzenwerk mehrstufig, bevorzugt dreistufig. In einer weiteren bevorzugten Ausführungsform der Erfindung werden bei der mehrstufigen Dispergierung unterschiedliche Spaltbreiten bei jeder Stufe benutzt. Besonders bevorzugt nimmt die Spaltbreite mit der Zahl der Durchläufe ab. Besonders bevorzugt nimmt die Spaltbreite mit jedem Spaltdurchgang um einen Faktor ≥ 1,5, ganz besonders bevorzugt um einen Faktor ≥3 ab. Bevorzugt beträgt die kleinste Spaltbreite des Prozesses ≤ 40 µm, besonders bevorzugt ≤ 13 µm, ganz besonders bevorzugt ≤ 5 µm. Bevorzugt beträgt die Drehzahl der Abnahmewalze ≥ 100 U/min, besonders bevorzugt ≥200 U/min, ganz besonders bevorzugt ≥ 300 U/min.. Vorzugsweise beträgt das Drehzahlverhältnis 1:3:9, wobei die Abnahmewalze die größte Drehzahl besitzt.

In einer besonders bevorzugten Ausführungsform der Erfindung erfolgt die Dispergierung einstufig mit einer Drehzahl der Abnahmewalze ≥ 300 U/min. und einem Walzenspalt zwischen Mittel- und Abnahmewalze von ≤ 10 µm

Vorzugsweise wird der so erhaltene Masterbatch anschließend mit Hilfe eines Extruders homogenisiert und/oder granuliert.

Die nach diesem Verfahren hergestellten nanopartikelhaltigen Masterbatches werden vorzugsweise bei der Herstellung von Elastomeren als verstärkender Füllstoffe und/oder als elektrisches oder thermisches Leitfähigkeitsadditiv eingesetzt. Bei den Elastomeren handelt es sich um bis zu ihrer Zersetzungstemperatur vernetzte Polymerwerkstoffe, die bei niedrigen Temperaturen deutlich unterhalb 0°C glasartig erstarrt sind, selbst bei hohen Temperaturen nicht viskos fließen, sondern sich in Temperaturbereich von Glas- bis Zersetzungstemperatur elastisch verhalten.

In einer weiteren bevorzugten Ausführungsform der Erfindung können auch mehrere Dreiwalzenwerke hintereinander gestellt und eingesetzt werden. In dem erfindungsgemäßen Verfahren ist die kontinuierliche Fahrweise bevorzugt.

Die nachfolgenden Beispiele dienen der Erläuterung der Erfindung, ohne dabei limitierend zu wirken.

### Ausführungsbeispiele:

Dabei wurden die folgenden Einsatzstoffe verwendet:
   Baytubes® C150P = CNT ein mehrwandiges Carbon-Nanotubes (CNT) der Firma Bayer MaterialScience AG.
   **NBR-Latex** = NBR-Latex mit 18,9% Perbunan® 2870 F (Feststoffanteil).
   **Perbunan® 2870F** = **NBR-Kautschuk** mit einem Acrylnitrilanteil von 28% und einer Mooney-Viskosität von ML(1+4) bei 100°C von 70 MU, erhältlich bei Lanxess Deutschland GmbH.

### 1) Herstellung von CNT-Latex-Suspensionen:

In einer Glovebox wurden suksessive 30 Gew. % CNTs in 70 Gew.%NBR-Latex zunächst mittels eines Flügelrühres eingerührt. Mit zunehmenden CNT Anteil koaguliert der Latex, da das CNT-Pulver das Wasser aufnimmt. Dann wurden die CNTs mit einem Spatel von Hand eingerührt und verteilt. Durch die Koagulation des Latex werden die CNTs gebunden und können auch beim plötzlichen Sieden von Wasser nicht mehr in die Atmosphäre gelangen, im Unterschied zu wässrigen Suspensionen ohne Latex-Anteil.

### 2) Herstellung von 20Gew.%-igen CNT-haltigen Masterbatches mittels Innenmischer (nicht erfindungsgemäß)

Zur Herstellung von insgesamt vier 20 Gew.%-igen CNT-Masterbatches MB1 bis MB4 mittels Innenmischer wurden die in Beispiel 1) beschriebenen staubfreien CNT-Vorbatches verwendet.

Dazu wurde in einem 1,51- Innenmischer der Firma Gumix 814 g Perbunan® 2870F vorgelegt und für ca. 2 min. homogenisiert. Die Drehzahl betrug 50 U/min. Der Innenmischer wurde dabei auf 100°C temperiert. Dann wurden 763 g der CNT-Vorbatches hinzugefügt. Dabei wurde der Stempel des Innenmischers zeitweise hochgefahren, um den Austrag des Wassers zu erleichtern. Das Wasser verdampfte auf diese Weise innerhalb von ca. 5 bis 10 min.

Für den Masterbatch 1 wurde die Dispergierung im Innenmischer nach 11 Minuten nach Entfernung des Wassers nicht weiter fortgeführt.

Für Masterbatch 2 bis Masterbatch 4 wurde die Dispergierung fortgesetzt. Die gesamte Mischzeit der CNTs im Innenmischer ist in Tabelle 1 angegeben. Aus den so erhaltenen Batches MB 1 bis MB4 wurde mit Hilfe einer Doppelwalze der Firma Rubikon Felle gezogen und daraus ca. 6mm dicke Probekörper für die Messung des elektrischen Widerstandes und der rheologischen Eigenschaften gestanzt. Die Messwerte sind in Tabelle 1 aufgeführt.

### 3) Herstellung von 20Gew.%-igen CNT-Masterbatches mittels Dreiwalzenwerk (erfindungsgemäß):

Der Masterbatch MB 1 aus dem Beispiel 2 wurde nachdem Proben für die Prüfen entnommen wurden, anschließend dreimal über das Dreiwalzenwerk der Firma Exakt gegeben. Dazu wurde ein 2 mm dickes Fell auf der Doppelwalze gezogen und dieses Fell in dünne Streifen geschnitten. Die Streifen wurde vor Aufgabe auf das Dreiwalzenwerk auf ca. 100°C vortemperiert.

Beim ersten Walzendurchgang betrug der 1. Walzenspalt 120 µm der zweite Walzenspalt 40 µm (MB5). Die Drehzahl der Aufgabewalze betrug 100 U/min. Das Drehzahlverhältnis betrug 1:3:9. Beim zweiten Durchgang betrug der erste Walzenspalt 40 µm und der zweite Walzenspalt 13 µm (MB6). Beim dritten Durchgang wurde der erste Walzenspalt auf 13 µm und der zweite Walzenspalt 5 µm (MB7) eingestellt. Aufgrund dieses geringen Walzenspaltes bei MB7 können Agglomerate > 10 µm ausgeschlossen werden (Geringfügige Aufweitungen des Walzenspaltes bei großen Materialdurchsatz können nicht ausgeschlossen werden.)

Für die Dispergierung auf dem Dreiwalzenwerk von ca. 1 kg MB 1 zur Herstellung von MB7 wurden nur ca. 20 min. benötigt.

### 4) Prüfung der nach 2) und 3) hergestellten 20Gew.%-igen Masterbatches

Die rheologischen Eigenschaften wurde mit einem RPA2000 der Firma Alpha-Technologies ermittelt. Dazu wurde zweimal hintereinander mit einer Frequenz von 0,5 Hz bei einer Temperatur von 100°C die Dehnungsamplitude von 0,3% auf 1000% gesteigert (Dehnungssweep). Tab. 1 enthält den Speichermodul G'(1%) bei kleinen Dehnungsamplituden des zweiten Dehnungssweeps.

Der spezifische elektrische Volumenwiderstand wurde mit einem Widerstandsmessgerät Milli TO3 der Firma H.P. Fischer Elektronik GmbH&Co ermittelt. Hierzu wurden jeweils drei bis fünf Messungen mit der Schutzring-Elektrode EH15 der Firma H.P. Fischer Elektronik GmbH&Co an Probenkörpern mit 6 bis 10 mm Dicke bestimmt.

Die Ergebnisse sind in Tab. 1 aufgeführt. Aus den für MB 2 bis MB4 gemessenen Werten ist ersichtlich, dass ab einer Gesamtmischzeit von 21 Minuten im Innenmischer die Speichermoduli (G'(1%)) stark abnehmen und der elektrische Widerstand zunimmt. Dies kann auf einen Bruch von CNTs zurückgeführt werden, was nicht erwünscht ist. Zudem sind selbst nach 80 min. Mischzeit im Innenmischer noch große Agglomerate unter dem Lichtmikroskop sichtbar. Die Standardabweichung des elektrischen Widerstandes nimmt für MB2 bis MB4 mit zunehmender Mischzeit kaum ab, was ein Zeichen für eine geringe Homogenität des Masterbatches ist.

Im Vergleich dazu reduziert sich bei den nach dem erfindungsgemäßen Verfahren hergestellten Masterbatches der Speichermodul nicht weiter nach dem ersten Durchgang durch das Dreiwalzenwerk. Nach insgesamt maximal 29 min. Prozesszeit wurden für MB 5 bis MB7 im Vergleich zu MB 3 ähnliche Werte für den elektrischen Widerstand und Speichermoduli erhalten. Für MB3 wurden hierfür allerdings 50 min. Prozesszeit im Innenmischer benötigt. Zudem ist die Standardabweichung des elektrischen Widerstandes bei den nach dem erfindungsgemäßen Verfahren erhaltenen Masterbatches deutlich geringer ist als beim nicht erfindungsgemäßen Verfahrens mit dem Innenmischer. Unter dem Lichtmikroskop werden keine Agglomerate mit einem Durchmesser > 10 µm gefunden. Dies zeigt, dass das erfindungsgemäße Verfahren schneller ist und homogenere Mischungen liefert. Zudem ist das Verfahren durch die Vermischung der CNT-Pulver in einer Glovebox mit Polymerlatex sicher.

**Tabelle 1**

| | | **MB1** | **MB2** | **MB3** | **MB4** | **MB5** | **MB6** | **MB7** |
|---|---|---|---|---|---|---|---|---|
| Baytubes® C 150 P | [%] | 20 | 20 | 20 | 20 | 20 | 20 | 20 |
| Perbunan® 2870 F | [%] | 80 | 80 | 80 | 80 | 80 | 80 | 80 |
| Innenmischer | | | | | | | | |
| Gesamte Mischzeit | | | | | | | | |
| CNTs | [min.] | 11 | 22 | 51 | 80 | 17 | 23 | 29 |
| Dreiwalzenwerk | | | | | | | | |
| Walzenspalt 1 | [µm] | | | | | 120 | 40 | 13 |
| Walzenspalt 2 | [µm] | | | | | 40 | 15 | 5 |
| Durchgänge | | | | | | 1 | 2 | 3 |
| RPA (2nd Sweep) | | | | | | | | |
| Modulus G' (1%) | [kPa] | 1254 | 1321 | 1037 | 638 | 1105 | 1049 | 1073 |
| Modulus G' (100%) | [kPa] | 213 | 216 | 184 | 144 | 211 | 200 | 203 |
| Elektrischer | | | | | | | | |
| Widerstand | | | | | | | | |
| | | 2,4E+0 | 9,0E+0 | 5,3E+0 | 5,6E+0 | | | 2,6E+0 |
| Mittelwert | Ω·m | 2 | 2 | 3 | 4 | | | 3 |
| St.Abw. | [%] | 80,9 | 32,8 | 29,8 | 27,4 | | | 7,1 |

| | | | | | | | | |
|---|---|---|---|---|---|---|---|---|
| St.Abw. = Standardabweichung | | | | | | | | |

## Patentansprüche

1. Verfahren zur Herstellung nanopartikelhaltiger Masterbatches, **dadurch gekennzeichnet, dass** die Nanopartikel mit mindestens einem Polymer-Latex vermischt, auf Temperaturen ≥ 100°C erwärmt und nach Entfernung des Wassers auf <10 Gew.%, vorzugsweise < 1 Gew.% mit einem Dreiwalzenwerk dispergiert werden.

2. Verfahren nach Anspruch 1, **dadurch gekennzeichnet, dass** als Nanopartikel Carbon-Nanotubes eingesetzt werden.

3. Verfahren nach Anspruch 1 oder 2, **dadurch gekennzeichnet, dass** der Anteil an Carbon-Nanotubes mindestens 10%, bezogen auf den Masterbatch, beträgt.

4. Verfahren nach einem oder mehreren der Ansprüche 1 bis 3, **dadurch gekennzeichnet, dass** der Anteil an Carbon-Nanotubes in der Mischung mit dem Polymer-Latex mindestens 5 % beträgt.

5. Verfahren nach einem oder mehreren der Ansprüche 1 bis 4, **dadurch gekennzeichnet, dass** als Nanopartikel single-wall, multi-wall, double wall Carbon-Nanotubes eingesetzt werden.

6. Verfahren nach einem oder mehreren der Ansprüche 1 bis 5, **dadurch gekennzeichnet, dass** als Nanopartikel Carbon-Nanotubes mit einer Agglomeratgröße < 2mm eingesetzt werden.

7. Verfahren nach einem oder mehreren der Ansprüche 1 bis 6, **dadurch gekennzeichnet, dass** als Polymere für den Polymer-Latex Naturkautschuk (NR), Isoprenkautschuk (IR), Styrol-Butadien-Kautschuk (SBR), carboxylierter Styrol-Butadien-Kautschuk (XSBR), Butadienkautschuk (BR), Isopren-isobutylen-Kautschuk (IIR), PolychloroprenKautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxylierter Acrylnitril-Butadien-Kautschuk (HXNBR), Fluorkautschuk (FKM), perfluorierter Fluorkautschuk (FFKM), Acrylat-Ethylen-Kautschuk (AEM), Acrylatkautschuk (ACM), Ethylen-Methylen-Acrylatkautschuk (EMA) und/oder Ethylen-Vinylacetat-Kautschuk (EVA) sowie Acrylsäureester-Styrol-Copolymerisate eingesetzt werden.
